# EUROPÄISCHE PATENTANMELDUNG

(11) **EP 4 748 587 A1**
(43) Veröffentlichungstag der Anmeldung: **27.05.2026**
(21) Anmeldenummer: 25214868.9
(22) Anmeldetag: 11.11.2025
(51) Int. Cl.: B60B 27/00, B60B 35/12, B60B 35/14

(54) **RADLAGERANORDNUNG**

(30) Priorität: 21.11.2024 DE 102024134324
(71) Anmelder: Volkswagen Aktiengesellschaft, 38440 Wolfsburg (DE)
(72) Erfinder: Schaaf, Gregor, 38440 Wolfsburg (DE)

(57) **Zusammenfassung**

Eine Radlageranordnung (1) umfasst eine Radnabe (10) mit einer Innenverzahnung (12), ein Radlager (20), das an der Radnabe (10) angeordnet ist, ein Gleichlaufgelenk (30) mit einem Achszapfen (32), wobei der Achszapfen (32) eine Außenverzahnung (33) aufweist, welche mit der Innenverzahnung (12) der Radnabe (10) zur Drehmomentübertragung in Eingriff steht, und eine Spanneinrichtung (40), über welche die Radnabe (10) unter Einschluss des Radlagers (20) derart axial gegen das Gleichlaufgelenk (30) verspannt ist, dass ein Lagerinnenring (21) des Radlagers (20) gegen eine Anlageschulter (34) des Gleichlaufgelenks (30) gepresst ist. Zwischen dem Lagerinnenring (21) und der Anlageschulter (34) ist ein metallischer, unbeschichteter und reibungserhöhender Reibring (50) angeordnet, für dessen Kontakt gegen den Lagerinnenring (21) und die Anlageschulter (34) die Gleitreibungszahl jeweils mindestens 80 % der Haftreibungszahl beträgt.

## Beschreibung

Die Erfindung bezieht sich auf eine Radlageranordnung, umfassend eine Radnabe mit einer Innenverzahnung, ein Radlager, das an der Radnabe angeordnet ist, ein Gleichlaufgelenk mit einem Achszapfen, wobei der Achszapfen eine Außenverzahnung aufweist, welche mit der Innenverzahnung der Radnabe zur Drehmomentübertragung in Eingriff steht, und eine Spanneinrichtung, über welche die Radnabe unter Einschluss des Radlagers derart axial gegen das Gleichlaufgelenk verspannt ist, dass ein Lagerinnenring des Radlagers gegen eine Anlageschulter des Gleichlaufgelenks gepresst wird.

Eine solche Radlageranordnung ist beispielsweise aus EP 3 964 726 B1 bekannt. Hierbei wird der Achszapfen eines Gleichlaufgelenks einer Antriebsgelenkwelle beispielsweise mittels eines Schraubverbands gegen die Radnabe verspannt. Dabei liegt der Lagerinnenring des Radlagers im Kraftfluss der axialen Vorspannkraft. Die Vorspannkraft muss entsprechend so hoch gewählt werden, dass der Lagerinnenring stets sicher in seiner Position gehalten wird.

Es ist jedoch auch möglich, den Lagerinnenring des Radlagers beispielsweise durch Wälzennieten an der Radnabe zu befestigen. In diesem Fall stützt sich ein Abschnitt der Radnabe unmittelbar an dem Gleichlaufgelenk ab. Der Lagerinnenring liegt in diesem Fall nicht im Kraftfluss der Vorspannkraft. Für die Festlegung des Gleichlaufgelenks an der Radnabe können dann geringere axiale Vorspannkräfte gewählt werden.

Grundsätzlich kann der Schraubverband dabei an einem "Kurzachszapfen" vorgesehen sein, indem ein Befestigungsbolzen als Spanneinrichtung in eine Stirnseite des Achszapfens eingeschraubt wird, wie dies in Fig. 1von EP 3 964 726 B1 gezeigt ist. Eine solche Bauweise kommt bisher lediglich dann zum Einsatz, wenn das Radlager im Kraftfluss der Vorspannkraft liegt.

Bei wälzgenieteten Radnaben kommt hingegen üblicherweise ein "Langachszapfen" zum Einsatz, welcher an seinem Ende einen Außengewindeabschnitt aufweist, auf den eine Mutter als Spanneinrichtung aufgeschraubt ist.

Die Drehmomentübertragung zwischen dem Gleichlaufgelenk und der Radnabe erfolgt bestimmungsgemäß über die Innen- und Außenverzahnung an der Radnabe und am Achszapfen. Durch die vorstehend beschriebene axiale Verspannung wird jedoch über Reibung auch an der Schulterfläche des Achszapfens ein gewisser Anteil an Drehmoment übertragen. An dieser Stelle kann es zu ungewünschten akustischen Effekten kommen, wenn das Drehmoment die Haftreibung überwindet und eine schlagartige kleine Relativbewegung zwischen der Schulter und der diese abstützenden Gegenfläche entsteht. Die Relativbewegung resultiert aus der Tatsache, dass die Drehmomentübertragung im Bereich des Verzahnungseingriff zwischen der Innen- und Außenverzahnung nahezu unvermeidlich mit einer gewissen Elastizität und/oder Spiel behaftet ist. Das auftretende Geräusch ist auch als Anfahrknacken oder "Ping Noise" bekannt.

Wenn ein solches Rutschen auch in entgegengesetzter Richtung erfolgt, beispielsweise beim Rückwärtsfahren oder durch Schubmomente, wie sie bei Fahrzeugen mit elektrischem Antrieb im Rekuperationsbetrieb entstehen, kann es wiederholt zu einer solchen unerwünschten Geräuschbildung kommen. Durch den Trend zu höheren Raddrehmomenten (große Räder und/oder große Motordrehmomente) und wegen der Rekuperation bei Fahrzeugen mit elektrischem Antrieb verschärft sich diese Problematik, welche mit herkömmlichen Maßnahmen kaum mehr zu beherrschen ist.

Wie in EP 3 964 726 B1 beschrieben, bestehen bisher folgende Ansätze:
1. Ein erster Ansatz besteht darin, die Reibung an der Anlageschulter stark zu erhöhen. Dem liegt die Überlegung zugrunde, dass kein Rutschen mehr auftreten sollte. EP 3 964 726 B1 nennt hierzu sehr raue, ölfreie Oberflächen oder auch Zwischenlagen aus Diamantfließ oder Diamantscheiben. Eine Überschreitung der Haftreibung ist jedoch in der Praxis oftmals kaum zu vermeiden. Der Drehmomentabfall in einer solchen Situation ist beachtlich. Aufgrund des hohen Reibwerts tritt dann zudem ein verstärkter Verschleiß im Bereich der Anlageschulter auf. Dies ist insbesondere im Rekuperationsbetrieb bei den oben genannten Kurzachszapfen problematisch, da mit zunehmendem Verschleiß ein Abfall der Vorspannkraft am Radlager auftritt, so dass letztlich die Sicherheit des gesamten Schraubverbands gefährdet sein könnte.
2. Ein zweiter Ansatz besteht darin, die Reibung an der Anlageschulter soweit zu verringern, dass beim Rutschen kein Geräusch mehr auftritt. Dies kann beispielsweise durch reibungsmindernde Gleitscheiben als Zwischenlage erzielt werden, wie dies in EP 1 526 297 A1, EP 2 263 887 A1 und JP 2003 097588 A vorgeschlagen wird. Durch die Verminderung der Reibung wird der Anteil an Drehmoment, welcher über die
   Anlageschulter am Gleichlaufgelenk übertragen wird, verringert. Dieser Drehmomentanteil muss somit zusätzlich über die Innen- und Außenverzahnung zwischen Radnabe und Achszapfen geführt werden. Dazu müssen der Achszapfen und die Radnabe entsprechend ertüchtigt werden. Dies bedeutet wiederum eine massivere Ausgestaltung des Achszapfens mit einem größeren Durchmesser und/oder eine Vergrößerung der Axiallänge des Verzahnungseingriffs. In beiden Fällen resultieren hieraus ein zusätzlicher Bauraumbedarf sowie ein erhöhtes Bauteilgewicht, was gleichermaßen unvorteilhaft ist.
   In der Regel kommen bevorzugt Langachszapfen zum Einsatz, da diese im Unterschied zu Kurzachszapfen als Vollmaterial ausgeführt werden können und entsprechend kompakter bleiben. Durch Verwendung von wälzgenieteten Radlagern bestehen zudem geringere Anforderungen an die Verschraubungssicherheit. Die Axialkraft kann geringer gehalten werden, da das Radlager nicht sicher mit vorgespannt werden muss, wodurch letztlich der Drehmomentabfall beim Rutschen und damit auch die Geräuschbildung geringer ausfallen können, was wiederum den Einsatz beschichteter Gleitscheiben gestattet. Für Kurzachszapfen sind Gleitscheiben im Hinblick auf Torsionswechsellasten jedoch keine zufriedenstellende Lösung, da in diesem Fall eine deutlich höhere axiale Vorspannung notwendig ist.
3. Ein dritter Ansatz besteht darin, eine Passverbindung zwischen der Radnabe und dem Achszapfen derart spielfrei auszuführen, dass kein Lösen und damit kein Anschlagen der Bauteile mehr auftreten kann. Dies ist beispielsweise durch Verkleben, was jedoch einen Zusatzaufwand bei der Montage und im Kundendienstfall bedeutet, sowie ferner durch eine Pressung in der Verzahnung möglich. EP 3 964 726 B1 schlägt diesbezüglich eine spezielle Verzahnungsgeometrie vor, um unter Berücksichtigung einer wirtschaftlichen, großserientauglichen Fertigung eine hohe Pressung zu realisieren und dennoch sicherzustellen, dass die Bauteile von Hand, d.h. ohne zusätzliche Presseinrichtungen, fügbar sind. Bei hohen Rekuperationsdrehmomenten reicht letzteres jedoch möglicherweise nicht aus, um das Entstehen von Störgeräuschen zu unterbinden.

Vor diesem Hintergrund liegt der Erfindung die Aufgabe zugrunde, Lösungen aufzuzeigen, welche es gestatten, bei hohen Torsionswechsellasten sowie hoher axialer Verspannung der Radlageranordnung eine unerwünschte Geräuschbildung zu vermindern.

Diese Aufgabe wird durch eine Radlageranordnung mit den Merkmalen von Patentanspruch 1 gelöst. Die erfindungsgemäße Radlageranordnung zeichnet sich insbesondere dadurch aus, dass zwischen dem Lagerinnenring und der Anlageschulter ein metallischer, unbeschichteter und reibungserhöhender Reibring angeordnet ist, für dessen Kontakt gegen den Lagerinnenring und die Anlageschulter die Gleitreibungszahl mindestens 80 % der Haftreibungszahl beträgt.

Die Verwendung eines metallischen und unbeschichteten Reibrings gestattet eine Vorspannung der Radlageranordnung mit hohen Axialkräften auf einem Niveau, welches eine ausreichende Verschraubungssicherheit auch bei gleichzeitiger axialer Vorspannung eines Radlagers gewährleistet.

Bewegen sich die Gleitreibungszahl und Haftreibungszahl auf ähnlichem Niveau, bleibt der Drehmomentabfall beim Übergang von der Haftreibung zur Gleitreibung, d.h. einem Rutschen, gering. Der Anteil des Drehmoments, welcher über die Anlageschulter übertragen wird, verändert sich damit wenig, so dass der Mehraufwand im Hinblick auf eine zusätzliche Ertüchtigung im Bereich der Innen- und Außenverzahnung gering bleibt. Dies ist insbesondere im Hinblick auf eine kompakte Bauweise sowie die Verwendung von Kurzachszapfen von Vorteil.

Überdies wird hierdurch die Geräuschbildung trotz hoher axialer Vorspannung verringert. Ein prägnantes "ping noise" wird vermieden oder zumindest so weit zu einem leisen Knacken mit tiefer Frequenz abgeschwächt, dass dieses nicht mehr ohne Weiteres wahrgenommen wird.

Die erfindungsgemäße Lösung eignet sich hierdurch insbesondere für Fahrzeuge mit hohen Raddrehmomenten und/oder Rekuperation, wie sie insbesondere bei Elektrofahrzeugen auftreten.

Besondere Ausführungsarten der Erfindung sind Gegenstand weiterer Patentansprüche.

Die Haftreibungszahl liegt vorzugsweise über jener für eine Reibung von Stahl auf Stahl. Vorzugsweise ist dementsprechend die Haftreibungszahl bei trockener Reibung größer als 0,15 und kleiner als 0,30. Zu hohe Reibungsbeiwerte sind dabei jedoch zu vermeiden, da dann im Fall eines Rutschens ein verstärkter Verschleiß auftreten könnte, welcher letztlich mit der Zeit zu einem unerwünschten Vorspannungsabfall führen würde.

Gemäß einer weiteren besonderen Ausführungsart der Erfindung beträgt der Anteil des übertragenen Drehmoments über den Reibring bezogen auf das insgesamt zwischen der Radnabe und dem Gleichlaufgelenk übertragene Drehmoment 20 bis 40 %. Dies ist für eine kompakte und leichtgewichtige Bauweise von Vorteil und beispielsweise mit reibungsmindernden Gleitscheiben nicht zu bewerkstelligen. Unter dem "zu übertragenden Drehmoment" wird vorliegend das maximal am Rad übertragbare Drehmoment verstanden (auch Rutschmoment genannt, es hängt von der Achslast inklusive Achslastverlagerungen ab). Dynamische Effekte im Antriebsstrang können zu stoßartigen höheren Lastspitzen führen, fallen vorliegend jedoch nicht unter die Definition des "zu übertragenden Drehmoments".

Gemäß einer weiteren besonderen Ausführungsart der Erfindung weist der Reibring eine Zugfestigkeit von 500 bis 650 N/mm² und/oder eine Härte von 140 bis 230 HV10 auf. Dies ermöglicht eine hohe axiale Vorspannung mit Kräften von mehr als 100 kN.

Gleichwohl bleibt die Herstellung und Montage des Reibrings denkbar einfach. Dieser kann beispielsweise besonders kostengünstig als Blechstanzsteil ausgebildet sein.

Mit einer Dicke von vorzugsweise 0,2 bis 2,0 mm fällt der Reibring in Bezug auf den Bauraumbedarf sowie auf die Masse der Radlageranordnung nicht ins Gewicht. Vielmehr gestattet dieser, wie oben bereits erwähnt, eine sehr kompakte und leichtgewichtige Ausgestaltung der Radlageranordnung im Bereich des Achszapfens.

Gemäß einer weiteren besonderen Ausführungsart kann der Reibring aus einer Kupferlegierung bestehen. Als besonders vorteilhaft hat sich dabei eine Kupferlegierung mit einem Zinnanteil von 2 bis 8 % erwiesen.

Zur Erleichterung der Montage kann der Reibring einen Ringabschnitt aufweisen, von dessen Innenumfang mehrere Stege radial einwärts abstehen, wobei sich der Reibring insgesamt in einer Ebene erstreckt.

Gemäß einer weiteren besonderen Ausführungsart der Erfindung wird die Innen- und Außenverzahnung an der Radnabe sowie an dem Achszapfen durch eine spielfreie Passverzahnung gebildet, wobei die Spanneinrichtung ein Spannbolzen ist, welcher mit einem Gewindeabschnitt in eine Innengewindeöffnung, die am Achszapfen ausgebildet ist, axial eingeschraubt ist, und welcher mit einem Kopfabschnitt an der Radnabe abgestützt ist. Ein solcher Kurzachszapfen ermöglicht eine besonders kompakte Bauweise einer Radlageranordnung mit hohem Drehmomentübertragungspotenzial, insbesondere auch unter Wechsellast, und günstigen akustischen Eigenschaften.

Eine spielfreie Passverzahnung kann beispielsweise dadurch erhalten sein, dass eine Innenverzahnung und eine Außenverzahnung durch eine axiale Einzugskraft bei der Montage verpresst worden sind.

Nachfolgend wird die Erfindung anhand eines in der Zeichnung dargestellten Ausführungsbeispiels näher erläutert. Die Zeichnung zeigt in:
- Fig. 1: eine Längsschnittansicht einer Radlageranordnung mit Reibring nach einem Ausführungsbeispiel der Erfindung, und in
- Fig. 2: eine Ansicht des Reibrings.

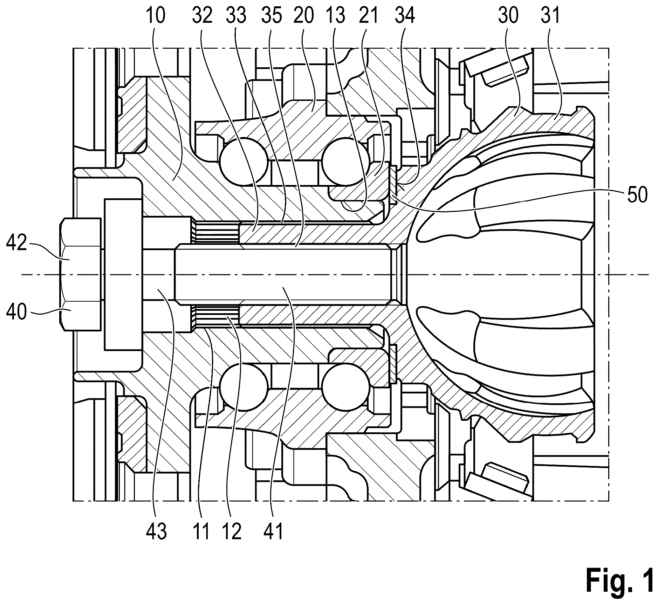

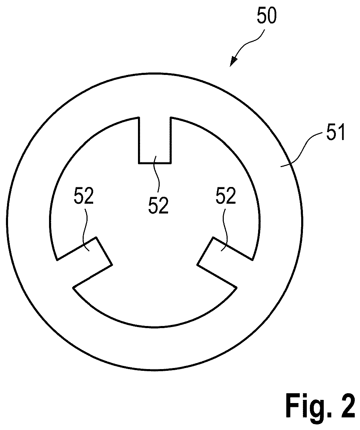

Figur 1 und 2 zeigen ein mögliches Ausführungsbeispiel zur Ausführung der Erfindung.

Die beispielhaft dargestellte Radlageranordnung 1 umfasst eine Radnabe 10, ein an der Radnabe 10 angeordnetes Radlager 20, ein Gleichlaufgelenk 30 als Teil einer Antriebswelle sowie weiterhin eine Spanneinrichtung 40 und einen Reibring 50.

Die Radlageranordnung 1 kommt vorzugsweise an Personenkraftwagen und leichten Nutzfahrzeugen zum Einsatz.

Die Radnabe 10 weist vorliegend eine Durchgangsöffnung 11 mit einer Innenverzahnung 12 auf. Die Innenverzahnung 12 kann beispielsweise in der Art einer Kerbverzahnung, Keilwellenverzahnung, Zahnwellenverzahnung oder dergleichen ausgeführt sein.

Weiterhin weist die Radnabe 10 an ihrem Außenumfang einen Absatz 13 zur Anordnung des Radlagers 20 auf. Das Radlager 20 sitzt mit einem Lagerinnenring 21 auf dem Absatz 13. Wie in Fig. 1 beispielhaft dargestellt, kann ein Teil eines Lagerinnenrings auch unmittelbar durch einen Abschnitt der Radnabe 10 bereitgestellt werden.

Das Gleichlaufgelenk 30 weist vorliegend eine Gelenkglocke 31 sowie einen axial daran anschließenden Achszapfen 32 auf. An dem Achszapfen 32 ist eine Außenverzahnung 33 ausgebildet, welche mit der Innenverzahnung 12 der Radnabe 10 zur Drehmomentübertragung in Eingriff steht.

Der Verzahnungseingriff zwischen der Innenverzahnung 12 und der Außenverzahnung 33 ist vorzugsweise spielfrei ausgebildet. Dazu können beispielsweise die Innenverzahnung 12 und der Außenverzahnung 33 axial miteinander verpresst sein.

Insbesondere kann dieser Verzahnungseingriff beispielsweise wie in EP 3 964 726 B1 beschrieben ausgeführt sein, ohne dass die Erfindung hierauf beschränkt wäre.

Mittels der Spanneinrichtung 40 ist die Radnabe 10 unter Einschluss des Radlagers 20 derart axial gegen das Gleichlaufgelenk 30 verspannt, dass der Lagerinnenring 21 des Radlagers 20 gegen eine Anlageschulter 34 des Gleichlaufgelenks 30 gepresst ist.

Die Spanneinrichtung 40 kann, wie in Figur 1 beispielhaft dargestellt, als Spannbolzen ausgeführt sein, welcher mit einem Außengewindeabschnitt 41 in einen Innengewindeabschnitt 35, der am Achszapfen 32 ausgebildet ist, axial eingeschraubt ist. Der Innengewindeabschnitt 35 kann an einer Durchgangsöffnung des Gleichlaufgelenks 30 ausgebildet sein.

Der Spannbolzen kann ferner einen Kopfabschnitt 42 aufweisen, der an der Radnabe 10 axial abgestützt ist.

Ferner kann der Spannbolzen optional einen Dehnungsabschnitt 43 mit im Vergleich zum Außengewindeabschnitt 41 verjüngten Querschnitt aufweisen, über welchen der Außengewindeabschnitt 41 in den Kopfabschnitt 42 übergeht.

Aufgrund des Innengewindeabschnitts 35 kann der Achszapfen 32 in Fig. 1 auch als Kurzachszapfen bezeichnet werden. Ein solcher "Kurzachszapfen" ist kürzer als ein sogenannter "Langachszapfen", bei dem der Achszapfen mit Außenverzahnung in der Regel aus Vollmaterial gebildet ist und für eine Mutter als Spanneinrichtung zusätzlich einen axial angesetzten Außengewindeabschnitt aufweist.

Die axiale Stirnseite des Lagerinnenrings 21 liegt nicht unmittelbar gegen die Anlageschulter 34 des Gleichlaufgelenks 30 an. Vielmehr ist zwischen beiden der Reibring 50 derart eingegliedert, so dass dieser wie auch das Radlager 20 im Kraftfluss der durch die Spanneinrichtung 40 bereitgestellten axialen Vorspannkraft liegen. Die axiale Vorspannkraft 40 des Radlagers 20 wird somit über den Reibring 50 an der Anlageschulter 34 des Gleichlaufgelenks 30 abgestützt.

Der Reibring 50 ist vorstehend ein metallisches, unbeschichtetes Bauteil, welches die Reibung im Vergleich zu einer direkten Anlage des Lagerinnenrings 21 an der Anlageschulter 34 erhöht. Entsprechend ist die Haftreibungszahl zwischen dem Reibring 50 und den Anlageflächen an den besagten Bauteilen 21 und 34 höherer, als die Haftreibungszahl zwischen dem Lagerring 21 und der Anlageschulter 34.

Insbesondere ist die Haftreibungszahl bei der Anlage gegen den Reibring 50 größer, als die Haftreibungszahl für eine Anlage von Stahl gegen Stahl.

Durch den Reibring 50 wird gewährleistet, dass bei einer Drehmomentübertragung von dem Gleichlaufgelenk 30 zu der Radnabe 10 oder in umgekehrter Richtung ein definierter Anteil des Gesamtdrehmoments über den Reibring 50 und damit über die Anlageschulter 34 übertragen wird.

Vorzugsweise beträgt der Anteil des übertragenen Drehmoments über den Reibring 50 bezogen auf das insgesamt zwischen der Radnabe 10 und dem Gleichlaufgelenk 30 übertragene Drehmoment 20 bis 40%. Vorzugsweise ist die Untergrenze größer als 25% und/oder die Obergrenze kleiner als 35%. Bei einer Vollastbeschleunigung kann an der Hinterachse eines Personenkraftwagens das Rad am übertragbare Drehmoment durch Achslastverlagerung beispielsweise etwa 3000 Nm betragen, bevor es auf der Straße durchrutscht.

Erfindungsgemäß ist ferner vorgesehen, dass die Gleitreibungszahl für die Reibpaarung aus Reibring 50 und Anlageschulter 34 genauso wie für die Reibpaarung aus Reibring 50 und Anlagefläche am Lagerinnenring 21 mindestens 80 % der Haftreibungszahl der jeweiligen Reibpaarung beträgt. Vorzugsweise beträgt die Gleitreibungszahl mehr als 86 % der Haftreibungszahl und weiter bevorzugt sogar mehr als 90 % der Haftreibungszahl.

Insbesondere kann die Gleitreibungszahl des Reibrings 50 gegen Stahl mindestens 80 % der Haftreibungszahl gegen Stahl, vorzugsweise mindestens 86 % der Haftreibungszahl gegen Stahl und weiter bevorzugt mehr als 90 % der Haftreibungszahl gegen Stahl betragen.

Die Haftreibungszahl bei trockener Reibung ist vorzugsweise größer als 0,15 und kleiner als 0,30. Vorzugsweise ist die Untergrenze auch größer als 0,16 oder größer als 0,17.Vorzugsweise ist die Obergrenze auch kleiner als 0,28 oder kleiner als 0,25.

Wird für trockene Reibung eine Haftreibungszahl für Stahl gegen Stahl mit 0,15 angenommen, so liegt die Gleitreibungszahl für eine solche Reibpaarung üblicherweise bei etwa 0,12, also bei maximal 80 % der Haftreibungszahl.

Ein erfindungsgemäßer Reibring 50 ermöglicht hingegen beispielsweise eine Haftreibungszahl gegen Stahl von 0,19 sowie eine Gleitreibungszahl gegen Stahl von 0,18.

Bei Verwendung des Reibrings 50 ist Differenz zwischen Gleitreibung und Haftreibung somit deutlich weniger stark ausgeprägt als zwischen einer Reibpaarung von Stahl auf Stahl. Gleichwohl ist das Reibungsniveau sowohl für die Gleitreibungszahl als auch für die Haftreibung höher als bei einer Reibpaarung von Stahl auf Stahl.

Dies hat zur Folge, dass bei Überwindung der Haftreibung der Anteil an Drehmoment, welcher über die Anlageschulter 34 übertragen wird, nicht signifikant abfällt. Der Achszapfen 32 sowie die Verzahnung zwischen der Radnabe 10 und dem Achszapfen 32 müssen daher entsprechend weniger stark ertüchtigt werden als im Fall einer stärkeren Differenz zwischen Haftreibungszahl und Gleitreibungszahl oder gar im Vergleich zur Verwendung einer Gleitscheibe anstatt eines Reibrings 50. Dies gestattet eine kompaktere und leichtgewichtigere Bauweise einer Radlageranordnung.

Der verminderte Drehmomentabfall wirkt sich auch positiv auf eine etwaige Geräuschbildung beim Übergang von der Haftreibung zur Gleitreibung aus. Ein entsprechendes "ping noise" tritt entweder überhaupt nicht mehr auf oder ist jedenfalls so schwach ausgeprägt, dass dieses kaum mehr wahrnehmbar ist.

Zur Abstützung hoher Axialkräfte, wie sie insbesondere bei Kurzachszapfen auftreten, bei welchen das Radlager 20 sowie der Reibring 50 im Kraftfluss der axialen Vorspannkraft der Spanneinrichtung 40 liegen, weist der Reibring 50 bevorzugt eine Zugfestigkeit von 500 bis 650 N/mm² und/oder eine Härte von 140 bis 230 HV10 auf.

Insbesondere können hierdurch Axialkräfte von 100 bis 250 kN, wie sie für die Vorspannung des Radlagers 20 benötigt werden, über den Reibring 50 abgestützt werden, ohne die Verschraubungssicherheit des Schraubverbands zu gefährden.

Zudem wird eine hohe Verschleißfestigkeit gewährleistet, so dass über die Lebensdauer der Radlageranordnung die Verschraubungssicherheit und Aufrechterhaltung der Vorspannung gewährleistet bleibt.

Der Reibring 50, welcher in Fig. 2 beispielhaft näher dargestellt ist, kann beispielsweise als Blechstanzsteil ausgebildet sein, dessen Dicke vorzugsweise in einem Bereich von 0,2 bis 2,0 mm und weiter bevorzugt von 0,3 bis 0,7 mm liegt. Der Reibring 50 lässt sich so sehr einfach und kostengünstig herstellen.

Zur Erleichterung der Montage kann der Reibring 50 einen Ringabschnitt 51 aufweisen, wobei vom Innenumfang des Ringabschnitts 51 mehrere Stege 52 radial einwärts abstehen. Die Stege 52 dienen dazu, den Ringabschnitt 51 des Reibring 50 bei der Montage auf der Höhe zwischen der Anlageschulter 34 und der korrespondierenden Gegenfläche am Lagerinnenring 21 zu halten.

Vorzugsweise ist der gesamte Reibring 50 derart ausgebildet, dass sich dieser insgesamt in einer Ebene erstreckt, also ein flaches, scheibenförmiges Bauteil bleibt.

In einer Ausführungsvariante besteht der Reibring 50 aus einer Kupferlegierung, welche vorzugsweise einen Zinnanteil von 2 bis 8 % aufweisen kann. Etwaige Beschichtungen oder Oberflächenbehandlungen an gewalztem Blech sind nicht erforderlich.

Als nichtbeschränkendes Beispiel für einen Werkstoff sei ein gewalztes Blech aus CuSn6 H 180 mit einer Blechdicke von 0,5mm genannt.

In Abwandlung des dargestellten Ausführungsbeispiels kann ein Reibring 50 der vorstehend erläuterten Art auch in Verbindung mit einem Langachszapfen und/oder in Verbindung mit einem wälzgenieteten Radlager zum Einsatz kommen. Im letztgenannten Fall eines wälzgenieteten Radlagers liegt der Reibring 50 dann nicht gegen einen Lagerinnenring des Radlagers 20, sondern gegen einen Wandabschnitt der Radnabe 10 an.

Die Erfindung wurde vorstehend anhand eines Ausführungsbeispiels und weiterer Abwandlungen näher erläutert. Insbesondere können technische Einzelmerkmale, welche oben im Kontext weiterer Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele und Abwandlungen beschränkt, sondern umfasst alle durch die Patentansprüche definierten Ausgestaltungen.

### Bezugszeichenliste

- 1: Radlageranordnung
- 10: Radnabe
- 11: Durchgangsöffnung
- 12: Innenverzahnung
- 13: Absatz
- 20: Radlager
- 21: Lagerinnenring
- 30: Gleichlaufgelenk
- 31: Gelenkglocke
- 32: Achszapfen
- 33: Außenverzahnung
- 34: Anlageschulter
- 35: Innengewindeabschnitt
- 40: Spanneinrichtung
- 41: Außengewindeabschnitt
- 42: Kopfabschnitt
- 43: Dehnungsabschnitt
- 50: Reibring
- 51: Ringabschnitt
- 52: Steg

## Patentansprüche

1. Radlageranordnung (1), umfassend:
eine Radnabe (10) mit einer Innenverzahnung (12),
ein Radlager (20), das an der Radnabe (10) angeordnet ist,
ein Gleichlaufgelenk (30) mit einem Achszapfen (32), wobei der Achszapfen (32) eine Außenverzahnung (33) aufweist, welche mit der Innenverzahnung (12) der Radnabe (10) zur Drehmomentübertragung in Eingriff steht, und
eine Spanneinrichtung (40), über welche die Radnabe (10) unter Einschluss des Radlagers (20) derart axial gegen das Gleichlaufgelenk (30) verspannt ist, dass ein Lagerinnenring (21) des Radlagers (20) gegen eine Anlageschulter (34) des Gleichlaufgelenks (30) gepresst ist,
**dadurch gekennzeichnet, dass**
zwischen dem Lagerinnenring (21) und der Anlageschulter (34) ein metallischer, unbeschichteter und reibungserhöhender Reibring (50) angeordnet ist, für dessen Kontakt gegen den Lagerinnenring (21) und die Anlageschulter (34) die Gleitreibungszahl jeweils mindestens 80 % der Haftreibungszahl beträgt.

2. Radlageranordnung (1) nach Anspruch 1, **dadurch gekennzeichnet, dass** die Haftreibungszahl bei trockener Reibung größer als 0,15 und kleiner als 0,30 ist.

3. Radlageranordnung (1) nach Anspruch 1 oder 2, **dadurch gekennzeichnet, dass** der Anteil des übertragenen Drehmoments über den Reibring (50) bezogen auf das insgesamt zwischen der Radnabe (10) und dem Gleichlaufgelenk übertragene Drehmoment 20 bis 40 % beträgt.

4. Radlageranordnung (1) nach einem der Ansprüche 1 bis 3, **dadurch gekennzeichnet, dass** der Reibring (50) eine Zugfestigkeit von 500 bis 650 N/mm² aufweist und/oder eine Härte von 160 bis 230 HV10 aufweist.

5. Radlageranordnung (1) nach einem der Ansprüche 1 bis 4, **dadurch gekennzeichnet, dass** der Reibring (50) ein Blechstanzsteil ist.

6. Radlageranordnung (1) nach einem der Ansprüche 1 bis 5, **dadurch gekennzeichnet, dass** der Reibring (50) eine Dicke von 0,2 bis 2,0 mm aufweist.

7. Radlageranordnung (1) nach einem der Ansprüche 1 bis 6, **dadurch gekennzeichnet, dass** der Reibring (50) aus einer Kupferlegierung besteht.

8. Radlageranordnung (1) nach Anspruch 7, **dadurch gekennzeichnet, dass** die Kupferlegierung einen Zinnanteil von 2 bis 8 % aufweist.

9. Radlageranordnung (1) nach einem der Ansprüche 1 bis 8, **dadurch gekennzeichnet, dass** der Reibring (50) einen Ringabschnitt (51) aufweist, wobei vom Innenumfang des Ringabschnitts (51) mehrere Stege (52) radial einwärts abstehen und wobei sich der Reibring (50) insgesamt in einer Ebene erstreckt.

10. Radlageranordnung (1) nach einem der Ansprüche 1 bis 9, **dadurch gekennzeichnet, dass** die Innen- und Außenverzahnung (12, 33) durch eine spielfreie Passverzahnung gebildet wird und/oder die Spanneinrichtung (40) ein Spannbolzen ist, welcher mit einem Außengewindeabschnitt (41) in einen Innengewindeabschnitt (35), der am Achszapfen (32) ausgebildet ist, axial eingeschraubt ist, und welcher mit einem Kopfabschnitt (42) an der Radnabe (10) abgestützt ist.
